# FASCICULE DE BREVET EUROPEEN

(11) **EP 3 752 345 B1**
(45) Date de publication et mention de la délivrance du brevet: **02.02.2022**
(21) Numéro de dépôt: 19711000.0
(22) Date de dépôt: 12.02.2019
(51) Int. Cl.: B29C 65/48, B29C 65/50, B29C 65/02, B29C 65/52, F16B 11/00, C09J 5/00, B29L 31/30, B29C 65/10, B29C 65/14, B29C 65/16, B29L 31/00

(54) **PROCÉDÉ D'ASSEMBLAGE DE PIÈCES DE REVÊTEMENT ET STRUCTURES COMPORTANT DES PIÈCES AINSI ASSEMBLÉES**
VERFAHREN ZUR MONTAGE VON VERKLEIDUNGSTEILEN UND STRUKTUREN MIT DADURCH MONTIERTEN TEILEN
METHOD FOR ASSEMBLING CLADDING PARTS AND STRUCTURES COMPRISING PARTS THUS ASSEMBLED

(30) Priorité: 14.02.2018 FR 1851241
(43) Date de publication de la demande: 23.12.2020
(73) Titulaire: CKP ENGINEERING, 75008 Paris, Ile de France (FR)
(72) Inventeur: FERAZZO, Julian, 40800 DUHORT BACHEN AQUITAINE (FR)
(74) Mandataire: Schwartz, Thierry J.
(86) Numéro de dépôt international: PCT/EP2019/053380
(87) Numéro de publication internationale: WO 2019/158501

(56) Documents cités:
- EP-A2- 2 602 097
- US-A- 4 015 035
- US-A1- 2012 043 009

## Description

### DOMAINE TECHNIQUE

L'invention se rapporte à un procédé d'assemblage de pièces de revêtement - panneaux, caissons, tronçons, plaques, etc. - de structures industrielles ou de transport, en particulier des aérodynes, ainsi qu'à une structure de transport comportant des pièces assemblées selon ce procédé.

Cette invention concerne notamment l'assemblage dans le domaine de l'aéronautique, assemblage de caissons de voilure, de tronçons de fuselage, de plaques de renfort, etc. Dans ce domaine et dans d'autres domaines (assemblages de châssis ou de renfort dans les domaines automobile, ferroviaire, maritime ou encore, dans le domaine industrielle: assemblage de pont, charpente, échafaudage, barrière de sécurité, etc.), il est habituel d'assembler les pièces de revêtement par rivetage - par exemple à l'aide de rivets aveugles ou de rivets pop. Les pièces à assembler sont en matériau composite, métallique ou thermoplastique.

Le rivetage présente de nombreux inconvénients: durée des opérations de contreperçage, récupération et positionnement du rivet, écrasement de l'extrémité et contrôle de l'écrasement, ce qui nécessite un outillage important (découpe, perçage, chanfreinage); poids des rivets utilisés en grand nombre (par exemple 50 rivets par mètre linéaire de couture); fragilisation des revêtements avec départ de fissures, formation de criques, dérapage d'outils, etc.; pollution (poussière lors du perçage, dégradation de la qualité de peinture de recouvrement); contrôle du rivetage imprécis (contrôle visuel en général). De plus, un risque important de perte d'écrous ou de rivets dans l'ossature que recouvrent les revêtements, cette perte pouvant avoir de graves conséquences, en particulier pour les aéronefs.

En particulier, le rivet aveugle nécessite deux opérateurs, un opérateur muni d'un pistolet pneumatique d'un côté, et un autre muni d'un outil d'écrasement de la tête du rivet de l'autre côté des pièces. Par ailleurs les rivets pop, qui fonctionnent selon le même principe de tirage de la tige pour faire pénétrer le corps et la tête de rivet, sont destinés à assembler des pièces d'équipement interne ou de décoration, et ne permettent pas de réaliser de fixations structurelles.

Par ailleurs, l'étanchéité entre les pièces n'est pas totalement assurée par le rivetage: pour rendre les rivets étanches, il peut être nécessaire de mettre en œuvre des opérations complémentaires: collage, martelage, couches de peinture supplémentaires, etc.

### ÉTAT DE LA TECHNIQUE

D'autres méthodes d'assemblage de pièces sont également connues par exemple, dans le domaine aéronautique, la couture avec des fils à haute résistance ou encore le soudage par friction-malaxage, qui réchauffe les bords des deux pièces à assembler près du point de fusion. Cette dernière solution est utilisée par exemple dans le document US 2010196733. Selon ce document, une plaque métallique de butée est usinée en ses deux extrémités pour former une éclisse en une extrémité et une forme globale en « Z ». L'éclisse est raccordée à une plaque de recouvrement métallique par rivetage et la plaque est raccordée bout à bout en son autre extrémité à une autre plaque de recouvrement métallique. Ce dernier raccordement bout à bout est réalisé par une liaison de matière par une soudure choisie entre une soudure par friction-malaxage, une soudure laser et/ou une soudure par faisceaux d'électrons.

Une telle solution par soudage bout à bout n'est pas satisfaisante: la préparation et les opérations de soudage ont des durées d'immobilisation importantes, l'ajout de plaque de butée alourdit la structure, l'utilisation de consommable affaiblit le rendement économique, la soudure se dégrade rapidement dans le temps et les liaisons bout à bout se détériorent également rapidement. De plus, les pièces à assembler peuvent être de nature différente - composite et métallique, composite et thermoplastique, thermoplastique et métallique, alors que les soudages sont adaptés à un seul type de matériau.

Par ailleurs, la couture de peau en matériau composite, notamment décrite dans les brevets WO 2010/012960, FR 2 687 174 ou US 5429853, consiste à assembler la peau et les profilés par des lignes de piquage (technique du « tufting ») d'un fil de couture présentant une haute résistance à la traction (par exemple à base de fibres de carbone ou de Kevlar).

De telles lignes de piquage présentent l'inconvénient de ne pas assurer le maintien en position des différents éléments en matériau composite du fait de l'absence de tension des fils de piquage. De ce fait, les manipulations lors de la mise en place des préformes dans un moule d'injection, s'avèrent très délicates et peuvent conduire à des désassemblages des différents éléments qui se traduisent par une chute de performance des zones concernées.

Il est également connu du document de brevet US 4015035 d'assembler deux pièces en matériau composite destinées à l'aéronautique par collage d'extrémités de fibres émergeant des faces de jonction biseautées des pièces, ce collage étant réalisé par une feuille adhésive de la taille des faces de jonction. Dans le document de brevet US 2012/043009, cet assemblage est réalisé par collage entre des avancées émergeants d'une pièce et des découpes réalisés dans l'autre pièce. Selon une autre méthode, telle qu'illustrée par le document de brevet EP 2 602 097, un tel assemblage utilise une couche d'adhésif entre des régions dépourvues de résine synthétique et renforcées par des moyens mécaniques. Ces solutions ne permettent pas d'assurer un assemblage fiable et sûr entre les pièces.

### EXPOSÉ DE L'INVENTION

L'invention vise à s'affranchir de ces inconvénients et de manière générale, des inconvénients exposés ci-dessus concernant le rivetage. Pour ce faire, l'invention prévoit de solidariser des pièces de revêtement par une cohésion chimique entre les extrémités superposées des pièces, les pièces pouvant s'étendre en continuité ou se superposer. L'assemblage est réalisé par un ancrage via des liaisons covalentes entre ces extrémités et un intermédiaire thermodurcissable de forme adaptée, après polymérisation de cet intermédiaire.

Plus précisément, la présente invention a pour objet un procédé d'assemblage de deux pièces par recouvrement de bords, chaque pièce étant constituée en un matériau choisi parmi un matériau composite, métallique et thermoplastique, le procédé se déroulant selon les étapes suivantes :
- réalisation d'au moins un patch comportant un substrat en résine époxyde mono-composant incorporant un agent de réticulation, la résine pouvant être choisie, par sélection des radicaux de la résine monomère époxyde et de l'agent de réticulation, entre une résine bi-phasique, permettant une polymérisation partielle par un apport d'énergie limité - en particulier par un traitement thermique à une température intermédiaire et/ou une exposition au rayonnement UV - produisant une phase d'adhérence, puis totale à la température de polymérisation par un apport d'énergie correspondant, et monophasique par polymérisation en chaîne à la température de polymérisation;
- en phase de préparation, un bord d'une première pièce sur lequel les patchs sont destinés à être positionnés est préalablement percé le long d'une ligne de couture en regard de ces patchs et en fonction d'un positionnement prédéterminé desdits patchs à des fins de contrôle optique, puis
- positionnement des patchs le long du bord de la première pièce par collage des patchs le long de la ligne de couture de la première pièce;
- en phase d'assemblage, superposition du bord de l'autre pièce sur le bord de la première pièce de sorte à prendre les patchs en sandwich entre les bords;
- fixation des bords aux patchs par un apport d'énergie de polymérisation totale des patchs qui se lient chimiquement auxdits bords;
- refroidissement des bords de pièces.

Selon des modes de réalisation préférés, le procédé selon l'invention prévoit les étapes suivantes en phase de préparation:
- le patch est préalablement découpé dans une préparation d'épaisseur constante d'un substrat de base de résine époxyde selon une forme déterminée de largeur inférieure à celle du bord de la première pièce, cette préparation pouvant supporter des températures comprises entre -20°C et +60°C sans changement de phase par polymérisation, et une polymérisation à une température entre 100 et 175°C;
- au moins un additif de mise en forme est ajouté à la résine époxyde avant découpage;
- au moins un additif d'optimisation de la qualité d'assemblage est ajouté à la résine époxyde avant découpage, choisi parmi un additif d'adaptation du coefficient de dilatation thermique au coefficient de dilatation thermique d'au moins l'un des matériaux des pièces à assembler, un colorant de contrôle de collage et/ou de polymérisation du patch, et un accélérateur de polymérisation;
- les bords des pièces à assembler sont préparés en fonction de la composition des pièces par un traitement de nettoyage en surface, choisi entre un traitement mécanique, un traitement chimique, un traitement thermique / électrique de flammage oxydant en surface, et/ou un passage dans un bain de pulvérisation;
- le positionnement des patchs est réalisé par collage selon une opération choisie entre une polymérisation partielle par un traitement thermique à une température intermédiaire dans le cas d'une résine époxyde biphasée, et un additif de collage aux patchs, choisi parmi des résines apportant un pouvoir collant dites résines tackifiantes et des adhérents chimiques, l'additif étant actif dès la température ambiante et thermo-fusible à des températures de 50 à 60°C;
- un pré-positionnement des patchs le long de la ligne de couture est réalisé par une opération choisie entre l'apposition d'un gabarit, un enrubannage des patchs et un centrage de localisation ;
- les patchs sont recouverts d'un film de protection amovible pour les protéger lors du passage des pièces en phase d'assemblage.

Le procédé selon l'invention permet d'assurer la cohésion, la liaison et la fonction structurale qu'engendrent des mécanismes physiques complexes, alors que des non-linéarités locales, des processus d'endommagement et de ruine sont souvent observés dans les zones d'assemblage.

Selon des modes de réalisation particulièrement avantageux, le procédé selon l'invention prévoit également les étapes suivantes en phase d'assemblage:
- l'apport d'énergie d'assemblage fourni successivement et localement le long de la couture peut être choisi entre un apport thermique, fourni par un outillage à buse chauffante portative, un apport par rayonnement UV et un apport par d'autres rayonnements, en particulier par rayonnement ionisant;
- l'apport thermique peut permettre d'atteindre localement une température pouvant dépasser jusqu'à 5°C la température maximale admise en environnement de montage;
- un contrôle du collage d'au moins un patch est opéré par un matériau conducteur de l'électricité agencé en périphérie des patchs qui sert de marqueur de localisation par détection électromagnétique, ce marqueur pouvant également servir de guidage pour l'avancement du moyen de chauffage;
- un contrôle de polymérisation d'au moins un patch est opéré optiquement par une détection optique, via le perçage, d'un changement de couleur du patch correspondant à un changement de phase;
- la détection optique est opérée au choix par détection à travers le perçage, des moyens de détection étant alors couplés à l'outillage à buse chauffante, par une sonde et par une méthode d'imagerie, en particulier par tomographie;
- l'assemblage des bords de deux pièces superposées comporte une mise sous pression au moyen d'un outillage d'assemblage, en particulier par poinçon et matrice.

L'invention se rapporte également à une structure de transport comportant des pièces assemblées par le procédé défini ci-dessus. Cette structure de transport, en particulier un aérodyne (aéronefs de structure porteuse), comporte au moins deux pièces de revêtement s'étendant en continuité et se terminant par des bords superposés, et fixés via au moins le patch constitué du substrat en résine époxyde polymérisée en liaison avec les bords des pièces, une des pièces de revêtement comportant des orifices de perçage le long d'une ligne de couture formée au droit des patchs.

Selon des caractéristiques préférées :
- le patch présente une forme globale choisie parmi une forme circulaire, une forme oblongue, une forme rectangulaire et une bande, avec une épaisseur comprise entre 0,1 mm et 90 mm, en fonction de la structure de transport envisagée et de ses dimensions qui peuvent atteindre des dizaines de mètres;
- le patch comporte un additif de mise en forme choisi parmi une cire, un agent plastifiant et/ou un antioxydant;
- le patch comporte au moins un additif choisi parmi un agent de variation de dilatation thermique, un colorant, et/ou un accélérateur de polymérisation ; l'agent de variation de dilatation thermique permet de se rapprocher du coefficient de dilatation thermique des couples de matériau choisis et éviter des amorces de délaminage à température élevée, et le colorant permet de rendre compte du collage et/ou de la polymérisation du patch sur la pièce à assembler ;
- le patch comporte un anneau en matériau conducteur de l'électricité, en particulier en alliage cuivreux, d'épaisseur inférieure à celle du patch;
- les bords des pièces sont amincis en regard l'un de l'autre de sorte à former une continuité d'épaisseur de revêtement;
- dans le cas où la structure de transport est un aérodyne, les pièces de revêtement forment une partie de l'aérodyne choisie entre un fuselage, une voilure et/ou un empennage.

### PRÉSENTATION DES FIGURES

D'autres données, caractéristiques et avantages de la présente invention apparaîtront à la lecture de la description non limitée qui suit, en référence aux figures annexées qui représentent, respectivement :
- les figures 1a et 1b, une vue de face interne d'un exemple de tronçon concave de fuselage d'avion à bord aminci (figure 1a) pour être assemblé selon le procédé de l'invention, ainsi qu'une vue agrandie de ce bord (figure 1b);
- les figures 2a à 2c, une vue en face interne du tronçon de fuselage selon la figure 1a en cours de pré-positionnement de patchs, ainsi que des vues agrandies de face (figure 2b) et en section (figure 2c) du bord du tronçon le long de la ligne de couture;
- les figures 3a à 3c, une vue en face interne du tronçon selon les figures précédentes sur lequel un deuxième tronçon de fuselage est positionné par recouvrement des bords (figure 3a), les tronçons présentant des bords amincis superposés pour être assemblés selon le procédé de l'invention, ainsi que des vues agrandies en coupe selon la ligne de couture (figure 3b) et selon un plan normal à la ligne de coupe (figure 3c);
- les figures 4a et 4b, une vue en face externe (figure 4a) des deux tronçons de fuselage assemblés lors de l'étape de traitement thermique du procédé selon l'invention avec une buse chauffante, ainsi qu'une vue en face externe d'un tronçon en section le long de la ligne de couture des tronçons (figure 4b) ;
- la figure 5, une vue agrandie de la figure 4b illustrant schématiquement la buse chauffante en section;
- la figure 6, une vue en coupe d'un outillage de mise sous pression poinçon / matrice des bords de deux pièces s'étendant parallèlement dans leurs parties principales et à assembler selon le procédé de l'invention;
- les figures 7a à 7c, une vue en perspective d'un exemple de plaque à bord décalé et équipée de patchs collés (figures 7a) selon la phase de préparation du procédé d'assemblage selon l'invention avec une autre plaque, ainsi que des vues agrandies de face (figure 7b) et en coupe (figure 7c) de cette plaque au niveau des patchs;
- les figures 8a et 8b, une vue en perspective de la plaque selon la figure 7b après mise en place de la seconde plaque (figure 8a) par superposition de leurs bords via les patchs pour la phase d'assemblage de plaques selon le procédé de l'invention, ainsi qu'une vue en coupe (figure 8b) des plaques ainsi assemblés via les patchs, et
- la figure 9, différents exemples de formes de patchs selon l'invention.

Sur les figures, des éléments identiques ou correspondants sont repérés par un même signe de référence qui renvoie au(x) passage(s) ci-dessous qui le décrive(nt).

### DESCRIPTION DÉTAILLÉE

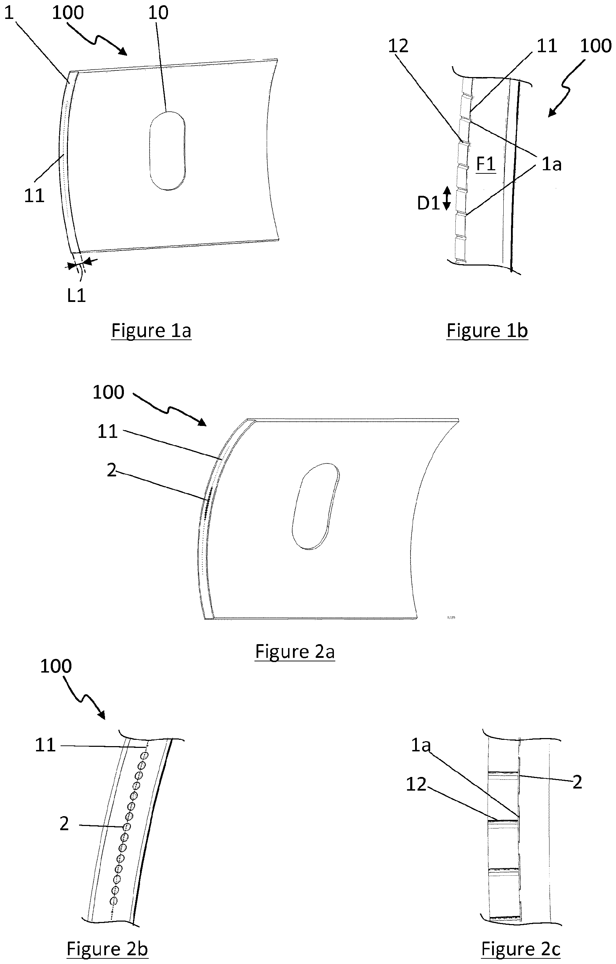

En référence à la vue de face interne du tronçon de fuselage 100 de la figure 1a, il apparaît que ce tronçon 100 présente une forme rectangulaire concave avec un trou oblongue centrale 10 destiné à l'installation d'un hublot. Le tronçon présente également un bord latéral 1 aminci par rapport à l'épaisseur du reste du tronçon de fuselage 100, sur une largeur L1 constante de ce tronçon 100. Cet amincissement est obtenu lors d'une phase d'usinage préalable par tout moyen connu de retrait de matière (détourage, jet d'eau, attaque chimique, etc.), en fonction du matériau constitutif du tronçon 100. Dans l'exemple illustré, le tronçon 100 est en alliage d'aluminium. Alternativement, le tronçon 100 peut être par exemple en un autre alliage métallique ou en matériau composite.

En phase préparatoire du procédé selon l'invention, une ligne de couture 11 est formée le long du bord 1 en position médiane sur sa largeur L1. Comme cela ressort plus distinctement sur la vue agrandie en coupe le long de la ligne de couture 11 de la figure 1b, il apparaît que cette ligne de couture 11 passe par les ouvertures 1a de perçages 12 sur la face interne F1 du bord 11. Les perçages 12 sont réalisés transversalement, c'est-à-dire perpendiculairement à la face interne F1 du bord 1 et à distance constante D1 les uns des autres par un outillage industriel approprié. Dans d'autres exemples de réalisation, la ligne de couture étant alors définie par une ligne médiane le long du bord 1 pour servir de ligne de pose de patchs.

Le bord 1 et en général tous les bords qui interviennent dans le procédé d'assemblage sont nettoyés par un enlèvement superficiel de matière (brossage, sablage, ponçage, passage aux ultrasons, et/ou autre traitement mécanique), par dégraissage (saponification, décapage, émulsification, ou tout traitement chimique), par flammage oxydant (traitement électrique ou thermique) ou passage dans un bain de pulvérisation.

Sur la vue de face de la figure 2a qui reprend la figure 1a, on distingue des patchs 2 le long de la ligne de couture 11. Ces patchs 2 apparaissent de manière agrandie sur la figure 2b et sur la vue en coupe de la figure 2c, avec une forme globalement circulaire et un positionnement régulièrement réparti sur les ouvertures 1a des perçages 12.

Les patchs 2 sont ici pré-positionnés en début de phase de préparation par l'apposition d'un gabarit de positionnement ou tout autre moyen (ruban, centreur de localisation, etc.). Ce pré-positionnement est facultatif. Un positionnement définitif des patchs lors de la phase d'assemblage, après retrait du gabarit, est assuré dans l'exemple par un traitement intermédiaire avec un apport de chaleur instaurant une température de 50°C.

Pour permettre ce traitement intermédiaire, les patchs sont constitués d'une résine époxyde mono-composant biphasée, qui peut polymérisée partiellement à la température du traitement intermédiaire, puis totalement à une température de polymérisation plus élevée en général supérieure à 100°C. La résine est mono-composant, l'agent de réticulation étant présent dès la préparation et non ajouté sous la forme d'un autre composant qui provoque la polymérisation à température ambiante, comme dans le cas des résines bi-composantes (tel que l'araldite ^{®}).

En variante, le traitement intermédiaire est effectué par une exposition au rayonnement UV lorsque la réticulation de la résine époxyde peut être amorcée et entretenue par ce type d'exposition.

Dans l'exemple, la résine époxyde est d'origine synthétique et intègre un agent de réticulation appropriée à ses radicaux pour réaliser une première polymérisation partielle de cette résine époxyde à 50°C et donc un collage des patchs 2 pour leur positionnement. Alternativement, la résine époxyde peut être bio-sourcée, c'est-à-dire d'origine naturelle, par exemple issues de sécrétions végétales.

Alternativement encore, la résine époxyde peut être monophasique en incorporant un agent de réticulation qui provoque une polymérisation en chaîne directement à la température de polymérisation finale (supérieure à 100°C), par exemple un catalyseur approprié. Dans ce cas, le collage de positionnement des patchs 2 peut être réalisé par un apport de rayonnement UV en temps limité ou par ajout d'un additif de collage, résine tackéfiante ou adhérent chimique, au mélange initial de la résine époxyde.

L'ajout d'une résine tackéfiante permet d'avoir un collage rapide réglable à chaud et de bonnes propriétés rhéologiques pour le patch 2. L'additif de collage peut, en fonction des matériaux des pièces et du type de résine tackéfiante ou d'adhérent chimique (colles classiques thermofusibles) choisi, être totalement inactif en cours de polymérisation et disparaître lors de la phase finale de polymérisation, ou totalement inerte pendant tout le procédé, ou participer à la constitution du patch même après la polymérisation complète de la résine époxyde.

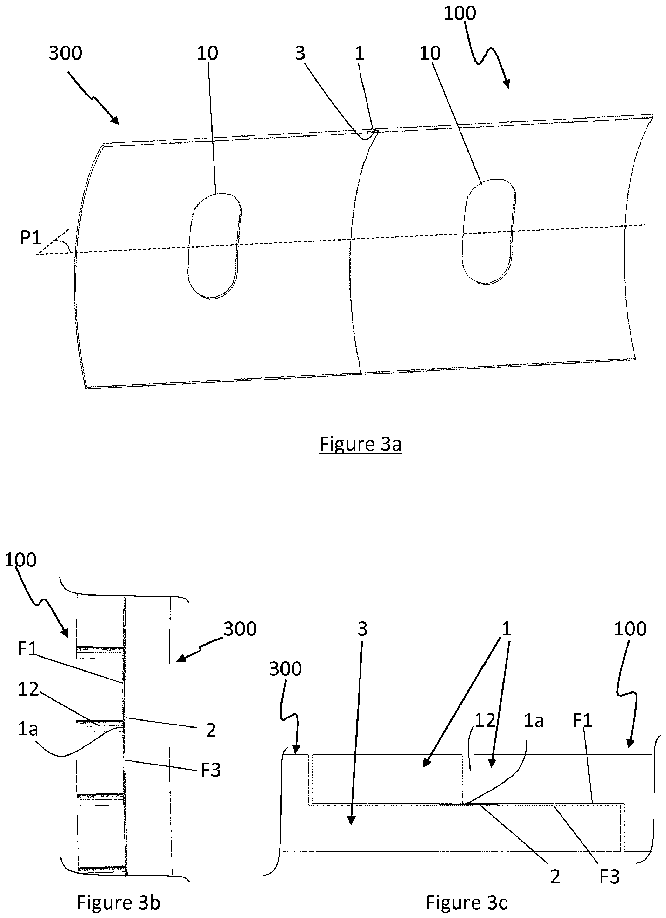

En référence aux vues de face interne de la figure 3a et de coupes agrandies selon la ligne de couture 11 et un plan P1 normale à cette ligne des figures 3b et 3c, il apparaît la mise en place par superposition des bords 1 et 3 de deux tronçons de fuselage, le tronçon 100 des figures précédentes et un tronçon 300 semblable au tronçon 100, avec leurs trous d'hublot 10. Cette mise en place est la première étape de la phase d'assemblage de ces tronçons 100 et 300 selon le procédé de l'invention.

Le tronçon de fuselage 300 présente un bord aminci 3 complémentaire du bord 1 du tronçon 100 pour que leur recouvrement par superposition reconstitue une même épaisseur que les tronçons 100 et 300 et donc une continuité de surface. Sur les vues en coupe des figures 3b et 3c, les patchs 2 se présentent entre la face interne F1 du bord 1 du tronçon 100 et la face externe F3 du bord 3 du tronçon 300. Chaque patch 2 reste positionné en regard de l'ouverture 1a des perçages 12.

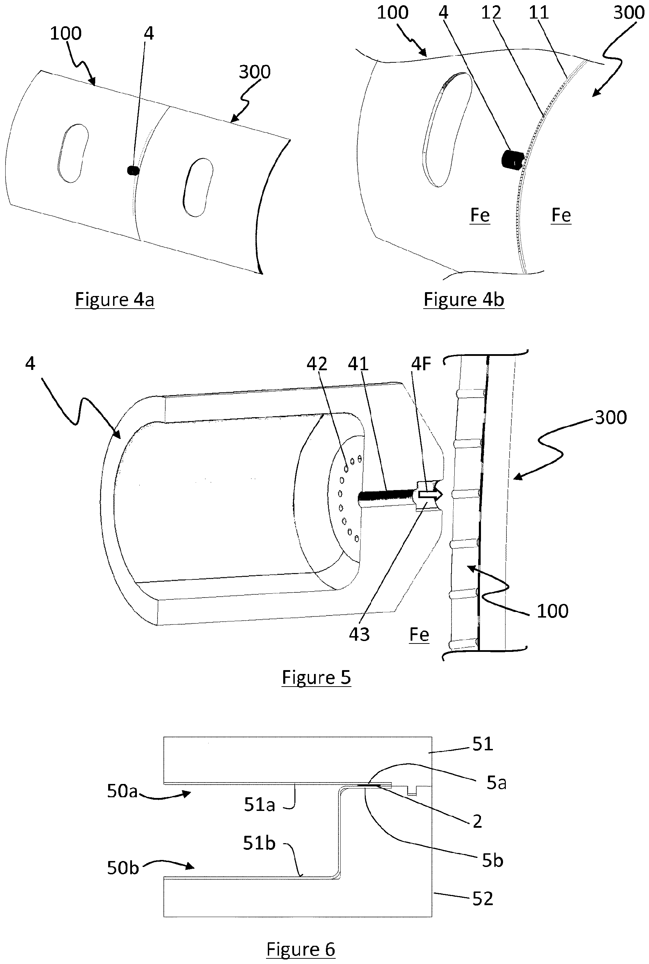

Comme illustré par les vues de face externe et en section des tronçons 100 et 300 des figures 4a et 4b, la phase d'assemblage des tronçons de fuselage 100 et 300 est réalisé par un apport ponctuel de chaleur opéré par une buse chauffante 4 le long de la ligne de couture 11 des perçages 12, du côté des faces externes Fe des tronçons 100 et 300. La buse est guidée par un pilotage automatique, ou alternativement manuel, le long de cette ligne de couture 11 pour parcourir cette ligne de bas en haut (ou de haut en bas). La polymérisation complète de la résine époxyde constitutive des patchs 2 est réalisée à une température de 150°C dans l'exemple. Cette polymérisation permet d'ancrer la résine des patchs 2 dans les faces F1 et F3 des tronçons 100 et 300 (cf. figures 3b et 5) par la création de liaisons covalentes entre l'alliage métallique et la résine époxyde polymérisée.

A l'état polymérisé, les patchs 2 sont durcis, le durcissement est quantifiable (par densimétrie, viscosimétrie, osmométrie, etc. sur échantillon) tout en présentant ici un volume sensiblement constant et un changement de couleur pour contrôler la fin de la polymérisation. En variante, le volume des patchs 2 est en expansion dans les perçages 12 grâce à un additif de dilatation thermique (par exemple à base d'uréthane qui s'expanse lors de sa polymérisation), ce qui permet un contrôle optique de fin de polymérisation.

Le changement de couleur est créé par l'ajout d'un colorant dans le mélange initial de résine époxyde ou, alternativement, par la résine elle-même selon les radicaux utilisés ou la disparition de l'agent réticulant.

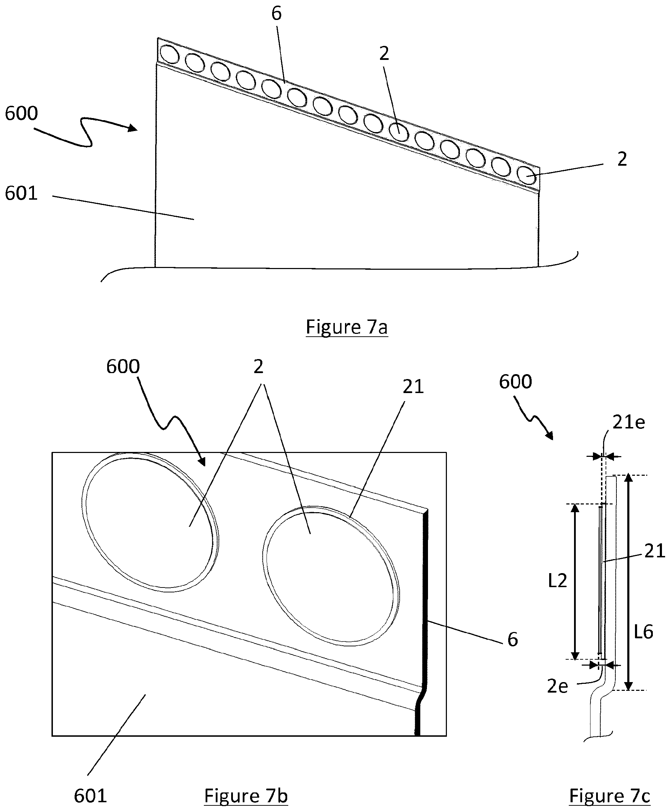

Le contrôle de fin de polymérisation, et donc d'assemblage des tronçons 100 et 300, est assuré par un détecteur optique monté sur la buse chauffante 4 ou, en variante: par une détection électromagnétique lorsque les patchs 2 sont pourvus d'un anneau métallique périphérique approprié (par exemple en alliage cuivreux, cf. le deuxième exemple d'assemblage ci-dessous, en regard des figures 7a à 7c), ou par tomographie ou autre imagerie inclusive permettant de géo-localiser les patchs 2. Ce contrôle peut également être effectué en début de phase d'assemblage, après la superposition des bords de tronçon 1 et 3, afin de vérifier la position des patchs 2.

Par agrandissement de la figure 4b, la figure 5 montre schématiquement la buse chauffante 4 en section contre la face externe Fe du tronçon 100, au droit d'un perçage 12 du bord 1 en contact avec le bord 3 du tronçon 300 via les patchs 2.

La buse chauffante 4 est portative sur batterie ou, alternativement, alimentée par une connexion monophasée à 220 V. Cette buse 4, repérée par un repérage 3D ou par triangulation, présente un canal principal central 41 de passage du flux chauffant 4F par rayonnement laser à une température juste supérieure (quelques degrés de plus, par exemple 5°C) à la température maximale de l'environnement de montage. Sur la figure 5, on distingue également des canaux 42 d'aspiration d'air pour l'étanchéité entre la buse chauffante 4 et la face externe Fe du tronçon de fuselage 100. L'espace de sortie 43 est mis sous vide d'air.

Dans certains cas, il est avantageux de prévoir des moyens de mise en pression des bords des pièces à assembler. Ainsi, sur la vue en coupe de la figure 6, un outillage comportant un poinçon 51 et une matrice 52 permet d'exercer un effort de précontrainte sur les bords 5a et 5b des pièces 50a et 50b s'étendant parallèlement dans leurs parties principales 51a et 51b. Les bords 5a et 5b sont assemblés via des patchs 2 positionnés entre eux, le patch étant collé préalablement sur la face 5a.

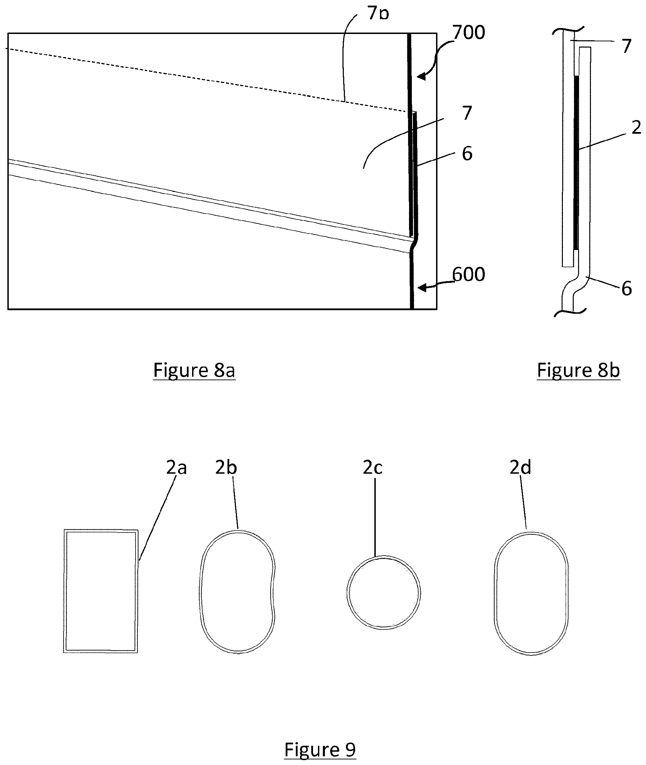

Selon un autre exemple de mise en œuvre détaillé, en référence aux figures 7a à 7c, 8a et 8b, deux plaques 600 et 700 sont assemblées via les patchs 2 sans perçage. La plaque 600, vue en perspective (figures 7a et 7b agrandie), présente un bord 6 parallèle mais emboutie de manière décalée par rapport au reste 601 de la plaque 600. Des patchs 2 sont régulièrement répartis par un pré-positionnement (par un gabarit, un enrubannage ou un centreur de localisation), puis positionnés par collage (par ajout d'un additif ou polymérisation partielle) le long du bord 6 avec un écart constant entre les patchs 2, comme dans les cas décrits en référence au premier exemple. Il est possible d'éviter l'étape du pré-positionnement.

Dans cet exemple, les patchs 2 sont également circulaires mais présentent un diamètre légèrement inférieur à la largeur L6 du bord 6 (cf. figure 7b). De plus, chaque patch 2, ou certains d'entre eux, sont cerclés d'anneaux sous forme d'inserts 21, d'épaisseur 21e de préférence inférieure à l'épaisseur 2e des patchs 2 (cf. la figure 7c qui illustre la plaque 600 vue en section). Ces inserts 21 sont à base d'un alliage cuivreux et sont destinés à permettre un contrôle de positionnement et de fin de polymérisation des patchs 2 en phase d'assemblage par une détection électromagnétique (à l'aide d'une puce électronique, un émetteur électromagnétique ou tout système connu).

En phase d'assemblage, le bord 7 (limité symboliquement par la ligne pointillée 7p) de l'autre plaque 700 est agencé contre le bord 6 de la plaque 600 via les patchs 2, comme illustré par la vue en perspective et la vue en section, respectivement des figures 8a et 8b. L'assemblage des plaques 600 et 700 est réalisé par balayage de la buse chauffante 4, décrite en référence aux figures 4a, 4b et 5, dans des conditions similaires et adaptées aux plaques 600 et 700. Par exemple, la buse chauffante est pilotée pour réaliser un parcours horizontal.

La figure 9 illustre différentes formes de patchs 2 adaptées à la forme des pièces à assembler. La préparation de la résine époxyde de base comme substrat, additionnée d'un agent réticulant et avantageusement de divers additifs (de collage, de coloration, d'accélération de polymérisation, etc.) est étalée pour définir une épaisseur constante par estampage à froid. L'épaisseur peut être comprise dans une large gamme de valeurs, par exemple entre 0,1 et 90 mm. La résine époxyde supporte des températures intermédiaires, de l'ordre de - 30 à +60°C sans polymérisation, la température de polymérisations se situant dans l'intervalle 100 à 175°C. Alternativement, la résine époxyde polymérise partiellement à une température intermédiaire pour permettre le collage, comme décrit ci-dessus. Cette base époxyde apporte de nombreux avantages: bonne stabilité au stockage, durcissement avec faible retrait ou expansion possible avec un additif approprié, collage facile et aussi solide qu'une soudure.

Puis les patchs 2 sont découpés à l'aide d'un instrument approprié et de forme correspondant à la forme de patch souhaitée: patch 2a de forme rectangulaire ou en bande de longueur sensiblement supérieure à la largeur (par exemple dix fois supérieure), patch 2b de forme oblongue avec un côté convexe, patch 2 de forme circulaire (comme dans les exemples illustrés ci-dessus), patch 2d de forme oblongue à côtés droits. D'autres formes sont bien entendu possibles: polygonale, en losange, etc.

L'invention n'est pas limitée aux exemples décrits et représentés. Il est par exemple possible d'assembler deux pièces (tronçons, plaques, panneaux, caissons, etc.) de composition différente, pouvant en particulier être prise parmi les matériaux composites, métalliques et thermoplastiques.

En outre, le traitement thermique d'adhérence des patchs est réalisé dans un environnement de préparation dans lequel la température de l'air, des pièces et du patch est comprise entre 5 et 50°C, de préférence entre 10°C et 35°C, l'humidité relative restant inférieure à 85%.

Dans le cas de pièces en matériau thermoplastique, le positionnement peut être mis en œuvre par une attaque chimique superficielle produisant la formation de liaisons réactives avec les patchs.

De manière générale, le traitement thermique de positionnement des bords assemblés est réalisé en un environnement de préparation dans lequel la température de l'air, des pièces et du patch est comprise entre 5 et 50°C, de préférence entre 10°C et 35°C, l'humidité relative restant inférieure à 85%.

Par ailleurs, l'apport thermique de polymérisation partielle ou totale peut être fourni par rayonnement, par convection et/ou conduction.

## Revendications

1. Procédé d'assemblage de deux pièces (100, 300 ; 50a, 50b ; 600, 700) par recouvrement de bords (1, 3 ; 5a, 5b ; 6, 7), chaque pièce (100, 300 ; 50a, 50b ; 600, 700) étant constituée en un matériau choisi parmi un matériau composite, métallique et thermoplastique, **caractérisé en ce qu'**il se déroule selon les étapes suivantes :
- réalisation d'au moins un patch (2, 2a à 2d) comportant un substrat en résine époxyde mono-composant incorporant un agent de réticulation, la résine étant choisie, par sélection des radicaux de la résine monomère époxyde et de l'agent de réticulation, entre une résine bi-phasique polymérisée partiellement par un apport d'énergie limité produisant une adhérence, puis totalement à la température de polymérisation par un apport d'énergie correspondant, et une résine monophasique à polymérisation en chaîne à la température de polymérisation;
- en phase de préparation, un bord (1; 5a; 6) d'une première pièce (100; 50a ; 600) sur lequel les patchs (2, 2a à 2d) sont destinés à être positionnés est préalablement percé (12) le long d'une ligne de couture (11) en regard de ces patchs (2, 2a à 2d) et en fonction d'un positionnement prédéterminé desdits patchs (2, 2a à 2d) à des fins de contrôle optique, puis
- positionnement des patchs (2, 2a à 2d) le long du bord (1, 5a; 6) de la première pièce (100; 50a ; 600) par adhésion des patchs (2, 2a à 2d) le long de la ligne de couture (11) de la première pièce (100; 50a ; 600);
- en phase d'assemblage, superposition du bord (3, 5b, 7) de l'autre pièce (300 ; 50b ; 700) sur le bord de la première pièce (100 ; 50a ; 600) de sorte à prendre les patchs (2, 2a à 2d) en sandwich entre les bords (1, 3 ; 5a, 5b ; 6, 7);
- fixation des bords (1, 3 ; 5a, 5b ; 6, 7) aux patchs (2, 2a à 2d) par un apport d'énergie de polymérisation totale des patchs (2, 2a à 2d) qui se lient chimiquement auxdits bords (1, 3 ; 5a, 5b ; 6, 7) ;
- refroidissement des bords (1, 3 ; 5a, 5b ; 6, 7) de pièces (100, 300; 50a, 50b; 600, 700);

2. Procédé d'assemblage selon la revendication 1, dans lequel le patch (2, 2a à 2d) est préalablement découpé dans une préparation d'épaisseur constante (2e) d'un substrat de base de résine époxyde selon une forme déterminée de largeur (L2) inférieure à celle (L6) du bord de la première pièce (100 ; 50a ; 600).

3. Procédé d'assemblage selon l'une quelconque des revendications 1 ou 2, dans lequel au moins un additif de mise en forme est ajouté à la résine époxyde avant découpage.

4. Procédé d'assemblage selon l'une quelconque des revendications précédentes, dans lequel au moins un additif d'optimisation de la qualité d'assemblage est ajouté à la résine époxyde avant découpage, choisi parmi un additif d'adaptation du coefficient de dilatation thermique au coefficient de dilatation thermique d'au moins l'un des matériaux des pièces à assembler (100, 300; 50a, 50b; 600, 700), un colorant de contrôle de collage et/ou de polymérisation du patch (2, 2a à 2d), et un accélérateur de polymérisation.

5. Procédé d'assemblage selon l'une quelconque des revendications précédentes, dans lequel les bords (1, 3 ; 5a, 5b ; 6, 7) des pièces à assembler (100, 300; 50a, 50b; 600, 700) sont préparés en fonction de la composition des pièces par un traitement de nettoyage en surface, choisi entre un traitement mécanique, un traitement chimique, un traitement thermique / électrique de flammage oxydant en surface, et/ou un passage dans un bain de pulvérisation.

6. Procédé d'assemblage selon l'une quelconque des revendications précédentes, dans lequel le positionnement des patchs (2, 2a à 2d) est réalisé par adhésion selon une opération choisie entre un traitement thermique à une température intermédiaire dans le cas d'une résine époxyde biphasée, présentant une polymérisation partielle à cette température inférieure à la température de polymérisation totale, un traitement chimique de formation de liaisons réactives dans le cas de pièces en matériau thermoplastique, et un additif de collage aux patchs (2, 2a à 2d).

7. Procédé d'assemblage selon la revendication précédente, dans lequel l'additif de collage est choisi parmi des résines apportant un pouvoir collant dites résines tackéfiantes et des adhérents chimiques, cet additif étant actif dès la température ambiante et thermo-fusible à des températures de 50 à 60°C.

8. Procédé d'assemblage selon l'une quelconque des revendications 6 ou 7, dans lequel le traitement thermique d'adhérence des patchs (2, 2a à 2d) est réalisé dans un environnement dans lequel la température de l'air, des pièces (100, 300; 50a, 50b; 600, 700) et du patch (2, 2a à 2d) est comprise entre 5 et 50°C, l'humidité relative restant inférieure à 85%.

9. Procédé d'assemblage selon l'une quelconque des revendications précédentes, dans lequel un pré-positionnement des patchs (2, 2a à 2d) le long de la ligne de couture (11) est réalisé par une opération choisie entre l'apposition d'un gabarit, un enrubannage des patchs (2, 2a à 2d) et un centrage de localisation.

10. Procédé d'assemblage selon l'une quelconque des revendications précédentes, dans lequel les patchs (2, 2a à 2d) sont recouverts d'un film de protection amovible pour les protéger lors du passage des pièces (100, 300; 50a, 50b; 600, 700) en phase d'assemblage.

11. Procédé d'assemblage selon l'une quelconque des revendications précédentes, dans lequel l'apport d'énergie d'assemblage fourni successivement et localement le long de la couture (11) est choisi entre un apport thermique, fourni par un outillage à buse chauffante (4) portative, un apport par rayonnement UV et par rayonnement ionisant.

12. Procédé d'assemblage selon la revendication précédente, dans lequel l'apport thermique fournit localement une température pouvant dépasser jusqu'à 5°C la température maximale admise en environnement de montage.

13. Procédé d'assemblage selon l'une quelconque des revendications précédentes, dans lequel un contrôle du collage d'au moins un patch (2, 2a à 2d) est opéré par un matériau conducteur de l'électricité (21) agencé en périphérie des patchs (2, 2a à 2d) qui sert de marqueur de localisation par détection électromagnétique.

14. Procédé d'assemblage selon la revendication 4, dans lequel le contrôle de polymérisation d'au moins un patch (2, 2a à 2d) est opéré par une détection optique, via le perçage (12), d'un changement de couleur du patch (2, 2a à 2d) correspondant à un changement de phase.

15. Procédé d'assemblage selon la revendication précédente, dans lequel la détection optique est opérée au choix par détection à travers le perçage (12), des moyens de détection étant alors couplés à l'outillage à buse chauffante (4), par une sonde et par une méthode d'imagerie.

16. Procédé d'assemblage selon l'une quelconque des revendications précédentes, dans lequel l'assemblage des bords (5a, 5b) de deux pièces superposées (50a, 50b) comporte une mise sous pression au moyen d'un outillage d'assemblage (51, 52).

17. Procédé d'assemblage selon la revendication précédente, dans lequel le marqueur (21) sert également de guidage pour l'avancement du moyen de chauffage (4).

18. Structure de transport comportant des pièces assemblées (100, 300; 50a, 50b; 600, 700) par le procédé selon l'une quelconque des revendications précédentes, comportant au moins deux pièces de revêtement (100, 300; 50a, 50b; 600, 700) s'étendant en continuité et se terminant par des bords superposés (1,3 ; 5a, 5b ; 6 ; 7) et fixés via au moins un patch (2, 2a à 2d) constitué du substrat en résine époxyde polymérisée en liaison avec les bords (1,3 ; 5a, 5b ; 6 , 7) des pièces (100, 300; 50a, 50b; 600, 700), **caractérisée en ce qu'**une des pièces (100; 50a;600) de revêtement comporte des orifices de perçage (12) le long d'une ligne de couture (11) formée au droit des patchs (2, 2a à 2d).

19. Structure de transport selon la revendication précédente, dans laquelle le patch (2, 2a à 2d) présente une forme globale choisie parmi une forme circulaire, une forme oblongue, une forme rectangulaire et une bande, avec une épaisseur comprise entre 0,1 mm et 90 mm.

20. Structure de transport selon l'une quelconque des revendications 18 ou 19, dans laquelle le patch (2, 2a à 2d) comporte un additif de mise en forme choisi parmi une cire, un agent plastifiant et/ou un antioxydant.

21. Structure de transport selon l'une quelconque des revendications 18 à 20, dans laquelle le patch (2, 2a à 2d) comporte au moins un additif choisi parmi un agent de variation de dilatation thermique, un colorant, et/ou un accélérateur de polymérisation.

22. Structure de transport selon l'une quelconque des revendications 18 à 21, dans laquelle le patch (2, 2a à 2d) comporte un anneau en matériau conducteur de l'électricité (21), d'épaisseur (21e) inférieure à celle (2e) du patch (2, 2a à 2d).

23. Structure de transport selon l'une quelconque des revendications 18 à 22, dans laquelle les bords (1, 3 ; 5a, 5b ; 6, 7) des pièces (100, 300; 50a, 50b; 600, 700) sont amincis en regard l'un de l'autre de sorte à former une continuité d'épaisseur de revêtement.

24. Structure de transport selon l'une quelconque des revendications 18 à 23 dans laquelle, dans le cas où la structure de transport est un aérodyne, les pièces de revêtement (100, 300; 50a, 50b; 600, 700) forment une partie de l'aérodyne choisie entre un fuselage, une voilure et/ou un empennage.

## Patentansprüche

1. Verfahren zur Montage von zwei Teilen (100, 300; 50a, 50b; 600, 700) durch Überlappung von Kanten (1, 3; 5a, 5b; 6, 7), wobei jedes Teil (100, 300; 50a, 50b; 600, 700) aus einem Material besteht, das unter einem metallischen, thermoplastischen und Verbundmaterial gewählt ist, **dadurch gekennzeichnet, dass** es nach den folgenden Schritten abläuft:
- Herstellen mindestens eines Patches (2, 2a bis 2d), das ein Substrat aus Einkomponenten-Epoxidharz umfasst, das ein Vernetzungsmittel beinhaltet, wobei das Harz, durch Selektion der Radikale des monomeren Epoxidharzes und des Vernetzungsmittels, zwischen einem zweiphasigen Harz, das durch eine begrenzte, eine Haftfähigkeit erzeugende Energiezufuhr teilweise, dann durch eine entsprechende Energiezufuhr bei der Polymerisationstemperatur vollständig polymerisiert wird, und einem einphasigen Harz mit Kettenpolymerisation bei der Polymerisationstemperatur gewählt ist;
- in der Vorbereitungsphase wird eine Kante (1; 5a; 6) eines ersten Teils (100; 50a; 600), auf dem die Patches (2, 2a bis 2d) positioniert werden sollen, zuvor entlang einer Nahtlinie (11) gegenüber diesen Patches (2, 2a bis 2d) und in Abhängigkeit von einer vorbestimmten Positionierung der Patches (2, 2a bis 2d) zwecks optischer Kontrolle durchbohrt (12), dann
- Positionierung der Patches (2, 2a bis 2d) entlang der Kante (1, 5a; 6) des ersten Teils (100; 50a; 600) durch Adhäsion der Patches (2, 2a bis 2d) entlang der Nahtlinie (11) des ersten Teils (100; 50a; 600);
- in der Montagephase Auflegen der Kante (3, 5b, 7) des anderen Teils (300; 50b; 700) auf die Kante des ersten Teils (100; 50a; 600), so dass die Patches (2, 2a bis 2d) sandwichartig zwischen den Kanten (1, 3; 5a, 5b; 6, 7) aufgenommen sind;
- Fixieren der Kanten (1, 3; 5a, 5b; 6, 7) an den Patches (2, 2a bis 2d) durch eine Zufuhr von Energie zur vollständigen Polymerisation der Patches (2, 2a bis 2d), die sich chemisch mit den Kanten (1, 3; 5a, 5b; 6, 7) verbinden;
- Kühlen der Kanten (1, 3; 5a, 5b; 6, 7) von Teilen (100, 300; 50a, 50b; 600, 700);

2. Montageverfahren nach Anspruch 1, bei dem das Patch (2, 2a bis 2d) zuvor bei einer Vorbereitung mit konstanter Dicke (2e) aus einem Epoxidharzbasissubstrat gemäß einer bestimmten Form mit einer Breite (L2), die geringer als die (L6) der Kante des ersten Teils (100; 50a; 600) ist, zugeschnitten wird.

3. Montageverfahren nach einem der Ansprüche 1 oder 2, bei welchem dem Epoxidharz vor dem Zuschneiden mindestens ein formgebendes Additiv zugegeben wird.

4. Montageverfahren nach einem der vorhergehenden Ansprüche, bei welchem dem Epoxidharz vor dem Zuschneiden mindestens ein die Montagequalität optimierendes Additiv zugegeben wird, das unter einem Additiv zur Anpassung des Wärmeausdehnungskoeffizienten an den Wärmeausdehnungskoeffizienten mindestens eines der Materialien der zu montierenden Teile (100, 300; 50a, 50b; 600, 700), einem Farbstoff zur Kontrolle der Klebung und/oder Polymerisation des Patches (2, 2a und 2d) und einem Polymerisationsbeschleuniger gewählt ist.

5. Montageverfahren nach einem der vorhergehenden Ansprüche, bei dem die Kanten (1, 3; 5a, 5b; 6, 7) der zu montierenden Teile (100, 300; 50a, 50b; 600, 700) in Abhängigkeit von der Zusammensetzung der Teile durch eine Reinigungsbehandlung an der Oberfläche vorbereitet werden, die zwischen einer mechanischen Behandlung, einer chemischen Behandlung, einer thermischen/elektrischen Behandlung zum oxidierenden Beflammen an der Oberfläche und/oder einem Durchlaufen eines Sprühbades gewählt ist.

6. Montageverfahren nach einem der vorhergehenden Ansprüche, bei dem die Positionierung der Patches (2, 2a bis 2d) durch Adhäsion gemäß einem Vorgang ausgeführt wird, der zwischen einer thermischen Behandlung bei einer Zwischentemperatur im Fall eines zweiphasigen Epoxidharzes, das eine teilweise Polymerisation bei dieser Temperatur aufweist, die geringer als die Temperatur zur vollständigen Polymerisation ist, einer chemischen Behandlung zur Bildung reaktionsfreudiger Verbindungen im Fall von Teilen aus thermoplastischem Material und einem Klebeadditiv an den Patches (2, 2a bis 2d) gewählt ist.

7. Montageverfahren nach dem vorhergehenden Anspruch, bei dem das Klebeadditiv unter Harzen, die eine Klebrigkeit verleihen, Klebrigmacherharz genannt, und chemischen Haftadditiven gewählt ist, wobei dieses Additiv ab der Umgebungstemperatur aktiv ist und bei Temperaturen von 50 bis 60 °C wärmeschmelzbar ist.

8. Montageverfahren nach einem der Ansprüche 6 oder 7, bei dem die Wärmebehandlung zum Haften der Patches (2, 2a bis 2d) in einer Umgebung ausgeführt wird, in der die Temperatur der Luft, der Teile (100, 300; 50a, 50b; 600, 700) und des Patches (2, 2a bis 2d) zwischen 5 und 50 °C beträgt, wobei die relative Luftfeuchtigkeit unter 85 % bleibt.

9. Montageverfahren nach einem der vorhergehenden Ansprüche, bei dem eine Vorpositionierung der Patches (2, 2a bis 2d) entlang der Nahtlinie (11) durch einen Vorgang ausgeführt wird, der zwischen dem Auflegen einer Schablone, einem Umwickeln der Patches (2, 2a bis 2d) und einer Lokalisierungszentrierung gewählt ist.

10. Montageverfahren nach einem der vorhergehenden Ansprüche, bei dem die Patches (2, 2a bis 2d) mit einer ablösbaren Schutzfolie bedeckt sind, um sie beim Überführen der Teile (100, 300; 50a, 50b; 600, 700) in die Montagephase zu schützen.

11. Montageverfahren nach einem der vorhergehenden Ansprüche, bei dem die Zufuhr von Montageenergie, die nacheinander und lokal entlang der Naht (11) bereitgestellt wird, zwischen einer Wärmezufuhr, die von einem Werkzeug mit tragbarer Heizdüse (4) bereitgestellt wird, einer Zufuhr durch UV-Strahlung und durch ionisierende Strahlung gewählt ist.

12. Montageverfahren nach dem vorhergehenden Anspruch, bei dem die Wärmezufuhr lokal eine Temperatur bereitstellt, welche die höchstzulässige Temperatur in der Montageumgebung um bis zu 5 °C überschreiten kann.

13. Montageverfahren nach einem der vorhergehenden Ansprüche, bei dem eine Kontrolle der Klebung mindestens eines Patches (2, 2a bis 2d) durch ein am Umfang der Patches (2, 2a bis 2d) angeordnetes elektrisch leitendes Material (21) vorgenommen wird, das durch elektromagnetische Detektion als Lokalisationsmarker dient.

14. Montageverfahren nach Anspruch 4, bei dem die Polymerisationskontrolle mindestens eines Patches (2, 2a bis 2d) durch eine optische Detektion, durch die Bohrung (12) hindurch, einer Farbänderung des Patches (2, 2a bis 2d), die einer Phasenänderung entspricht, vorgenommen wird.

15. Montageverfahren nach dem vorhergehenden Anspruch, bei dem die optische Detektion wahlweise durch Detektion durch die Bohrung (12) hindurch, wobei die Detektionsmittel dann mit dem Werkzeug mit Heizdüse (4) gekoppelt sind, durch eine Sonde und durch ein Bildgebungsverfahren vorgenommen wird.

16. Montageverfahren nach einem der vorhergehenden Ansprüche, bei dem die Montage der Kanten (5a, 5b) von zwei übereinanderliegenden Teilen (50a, 50b) eine Druckbeaufschlagung mittels eines Montagewerkzeugs (51, 52) umfasst.

17. Montageverfahren nach dem vorhergehenden Anspruch, bei dem der Marker (21) auch als Führung für die Vorwärtsbewegung des Heizmittels (4) dient.

18. Transportstruktur, umfassend nach dem Verfahren nach einem der vorhergehenden Ansprüche montierte Teile (100, 300; 50a, 50b; 600, 700), umfassend mindestens zwei Verkleidungsteile (100, 300; 50a, 50b; 600, 700), die sich durchgängig erstrecken und mit Kanten (1, 3; 5a, 5b; 6; 7) enden, die übereinanderliegen und über mindestens ein Patch (2, 2a bis 2d) fixiert sind, das aus dem Substrat aus Epoxidharz besteht, das in Verbindung mit den Kanten (1, 3; 5a, 5b; 6, 7) der Teile (100, 300; 50a, 50b; 600, 700) polymerisiert ist, **dadurch gekennzeichnet, dass** eines der Verkleidungsteile (100; 50a; 600) Bohrungsöffnungen (12) entlang einer Nahtlinie (11) umfasst, die lotrecht zu den Patches (2, 2a bis 2d) gebildet ist.

19. Transportstruktur nach dem vorhergehenden Anspruch, bei der das Patch (2, 2a bis 2d) eine globale Form, die unter einer Kreisform, einer länglichen Form, einer rechteckigen Form und einem Streifen gewählt ist, mit einer Dicke zwischen 0,1 mm und 90 mm aufweist.

20. Transportstruktur nach einem der Ansprüche 18 oder 19, bei der das Patch (2, 2a bis 2d) ein formgebendes Additiv umfasst, das unter einem Wachs, einem Weichmacher und/oder einem Antioxidans gewählt ist.

21. Transportstruktur nach einem der Ansprüche 18 bis 20, bei der das Patch (2, 2a bis 2d) mindestens ein Additiv umfasst, das unter einem Wärmeausdehnungsänderungsmittel, einem Farbstoff und/oder einem Polymerisationsbeschleuniger gewählt ist.

22. Transportstruktur nach einem der Ansprüche 18 bis 21, bei der das Patch (2, 2a bis 2d) einen Ring aus elektrisch leitendem Material (21) mit einer Dicke (21e), die geringer als die (2e) des Patches (2, 2a bis 2d) ist, umfasst.

23. Transportstruktur nach einem der Ansprüche 18 bis 22, bei der die Kanten (1, 3; 5a, 5b; 6, 7) der Teile (100, 300; 50a, 50b; 600, 700) einander gegenüberliegend gedünnt sind, so dass eine kontinuierliche Verkleidungsdicke gebildet wird.

24. Transportstruktur nach einem der Ansprüche 18 bis 23, bei der, wenn die Transportstruktur ein Luftfahrzeug ist, die Verkleidungsteile (100, 300; 50a, 50b; 600, 700) einen Abschnitt des Luftfahrzeugs bilden, der unter einem Rumpf, einer Tragfläche und/oder einem Leitwerk gewählt ist.

## Claims

1. Process for assembling two parts (100, 300; 50a, 50b; 600, 700) by overlapping of edges (1, 3; 5a, 5b; 6, 7), each part (100, 300; 50a, 50b; 600, 700) being constituted by a material chosen from a metallic and thermoplastic composite material, **characterized in that** it takes place according to the following stages:
- producing at least one patch (2, 2a to 2d) comprising a substrate made of one-component epoxy resin incorporating a crosslinking agent, the resin being chosen, by selection of the radicals of the epoxy monomer resin and the crosslinking agent, between a two-phase resin partially polymerized by a limited contribution of energy producing adherence, then completely polymerized at the polymerization temperature by a corresponding contribution of energy, and a single-phase resin having chain polymerization at the polymerization temperature;
- in a preparation phase, an edge (1; 5a; 6) of a first part (100; 50a; 600) on which the patches (2, 2a to 2d) are intended to be positioned is pierced beforehand (12) along a sewing line (11) facing these patches (2, 2a to 2d) and as a function of a predetermined positioning of said patches (2, 2a to 2d) for optical control purposes, then
- positioning of the patches (2, 2a to 2d) along the edge (1, 5a; 6) of the first part (100; 50a; 600) by adhesion of the patches (2, 2a to 2d) along the sewing line (11) of the first part (100; 50a; 600);
- in the assembling phase, superposition of the edge (3, 5b, 7) of the other part (300; 50b; 700) over the edge of the first part (100; 50a; 600) so as to sandwich the patches (2, 2a to 2d) between the edges (1, 3; 5a, 5b; 6, 7);
- attaching the edges (1, 3; 5a, 5b; 6, 7) to the patches (2, 2a to 2d) by a contribution of energy for complete polymerization of the patches (2, 2a to 2d), which become chemically bonded to said edges (1, 3; 5a, 5b; 6, 7);
- cooling the edges (1, 3; 5a, 5b; 6, 7) of the parts (100, 300; 50a, 50b; 600, 700);

2. Assembling process according to Claim 1, in which the patch (2, 2a to 2d) is precut from a preparation of unvarying thickness (2e) of a base substrate of epoxy resin according to a predetermined shape with width (L2) less than that (L6) of the edge of the first part (100; 50a; 600).

3. Assembly process according to either one of Claims 1 and 2, in which at least one shaping additive is added to the epoxy resin before cutting.

4. Assembling process according to any one of the preceding claims, in which at least one additive for optimization of the quality of assembling is added to the epoxy resin before cutting, which additive is chosen from an additive for adaptation of the thermal expansion coefficient to the thermal expansion coefficient of at least one of the materials of the parts to be assembled (100, 300; 50a, 50b; 600, 700), a colorant for controlling adhesive bonding and/or polymerization of the patch (2, 2a to 2d), and an polymerization accelerator.

5. Assembling process according to any one of the preceding claims, in which the edges (1, 3; 5a, 5b; 6, 7) of the parts to be assembled (100, 300; 50a, 50b; 600, 700) are prepared as a function of the composition of the parts by a surface-cleaning treatment, which treatment is chosen between a mechanical treatment, a chemical treatment, a flaming heat/electrical treatment which is surface-oxidizing, and/or passage to a spray bath.

6. Assembling process according to any one of the preceding claims, in which the positioning of patches (2, 2a to 2d) is carried out by adhesion according to an operation chosen between a heat treatment at an intermediate temperature in the case of a two-phase epoxy resin, exhibiting a partial polymerization at this temperature lower than the complete polymerization temperature, a chemical treatment for formation of reactive bonds in the case of parts made of thermoplastic, and an additive for adhesive bonding to the patches (2, 2a to 2d).

7. Assembling process according to the preceding claim, in which the additive for adhesive bonding is chosen from resins contributing tackiness, referred to as tackifying resins, and chemical adherents, this additive being active from ambient temperature and being a hot-melt additive at temperatures of 50 to 60°C.

8. Assembling process according to either one of Claims 6 and 7, in which the heat treatment for adherence of the patches (2, 2a to 2d) is carried out in an environment in which the temperature of the air, of the parts (100, 300; 50a, 50b; 600, 700) and of the patch (2, 2a to 2d) is between 5 and 50°C, the relative humidity remaining below 85%.

9. Assembling process according to any one of the preceding claims, in which a prepositioning of the patches (2, 2a to 2d) along the sewing line (11) is carried out by an operation chosen between the affixing of a gauge, a taping of the patches (2, 2a to 2d) and a location centring.

10. Assembling process according to any one of the preceding claims, in which the patches (2, 2a to 2d) are covered with a removable protective film for protecting them during the passage of the parts (100, 300; 50a, 50b; 600, 700) in the assembling phase.

11. Assembling process according to any one of the preceding claims, in which the contribution of assembly energy successively and locally provided along the sewing (11) is chosen between a thermal contribution, provided by a portable heating nozzle tool (4), a contribution by UV radiation and by ionizing radiation.

12. Assembling process according to the preceding claim, in which the thermal contribution locally provides a temperature which can exceed by up to 5°C the maximum temperature excepted in the fitting environment.

13. Assembling process according to any one of the preceding claims, in which monitoring of adhesive bonding of at least one patch (2, 2a to 2d) is carried out by an electrically conductive material (21) arranged at the periphery of the patches (2, 2a to 2d) which acts as marker of location by electromagnetic detection.

14. Assembling process according to Claim 4, in which the monitoring of polymerization of at least one patch (2, 2a to 2d) is carried out by optical detection, via the piercing (12), of a changing colour of the patch (2, 2a to 2d) corresponding to a phase change.

15. Assembling process according to the preceding claim, in which the optical detection is carried out, according to preference, by detection through the piercing (12), detection means then being coupled to the heating nozzle tool (4), by a probe and by an imaging method.

16. Assembling process according to any one of the preceding claims, in which the assembling of the edges (5a, 5b) of two superimposed parts (50a, 50b) comprises placing under pressure by means of an assembling tool (51, 52).

17. Assembling process according to the preceding claim, in which the marker (21) also acts as guidance for the forward progression of the heating means (4).

18. Transportation structure comprising parts (100, 300; 50a, 50b; 600, 700) assembled by the process according to any one of the preceding claims, comprising at least two cladding parts (100, 300; 50a, 50b; 600, 700) extending in continuity and terminating in superimposed edges (1, 3; 5a, 5b; 6; 7) attached via at least one patch (2, 2a to 2d) constituted by the substrate made of polymerized epoxy resin bonded to the edges (1, 3; 5a, 5b; 6, 7) of the parts (100, 300; 50a, 50b; 600, 700), **characterized in that** one of the cladding parts (100; 50a; 600) comprises piercing orifices (12) along a sewing line (11) formed in line with the patches (2, 2a to 2d) .

19. Transportation structure according to the preceding claim, in which the patch (2, 2a to 2d) exhibits an overall shape chosen from a circular shape, an oblong shape, a rectangular shape and a strip, with a thickness of between 0.1 mm and 90 mm.

20. Transportation structure according to either one of Claims 18 and 19, in which the patch (2, 2a to 2d) comprises a shaping additive chosen from a wax, a plasticizing agent and/or an antioxidant.

21. Transportation structure according to any one of Claims 18 to 20, in which the patch (2, 2a to 2d) comprises at least one additive chosen from a thermal expansion variation agent, a colorant and/or a polymerization accelerator.

22. Transportation structure according to any one of Claims 18 to 21, in which the patch (2, 2a to 2d) comprises a ring made of electrically conductive material (21), with a thickness (21e) less than that (2e) of the patch (2, 2a to 2d) .

23. Transportation structure according to any one of Claims 18 to 22, in which the edges (1, 3; 5a, 5b; 6, 7) of the parts (100, 300; 50a, 50b; 600, 700) are thinned facing one another so as to form a continuity in cladding thickness.

24. Transportation structure according to any one of Claims 18 to 23, in which, in the case where the transportation structure is a heavier-than-aircraft, the cladding parts (100, 300; 50a, 50b; 600, 700) form a portion of the heavier-than-aircraft chosen between a fuselage, an air foil and/or a tail unit.
